(19) **Europäisches Patentamt European Patent Office Office européen des brevets**

(11) **EP 1 486 364 B1**

(12) **EUROPEAN PATENT SPECIFICATION**

(45) Date of publication and mention of the grant of the patent:
**18.07.2007 Bulletin 2007/29**

(51) Int Cl.:
***B60H 1/32*** (2006.01)

(21) Application number: **04012796.1**

(22) Date of filing: **28.05.2004**

(54) **Vehicle air-conditioning system**

Klimaanlage eines Fahrzeugs

Appareil de climatisation pour véhicule

(84) Designated Contracting States:
**DE FR GB IT**

(30) Priority: **09.06.2003 JP 2003163651**

(43) Date of publication of application:
**15.12.2004 Bulletin 2004/51**

(73) Proprietor: **Isuzu Motors Limited Shinagawa-ku, Tokyo (JP)**

(72) Inventors:
• **Yamaguchi, Kazumi, c/o Isuzu Motors Limited Fujisawa-shi Kanagawa (JP)**
• **Matsumoto, Toshio, c/o Isuzu Motors Limited Fujisawa-shi Kanagawa (JP)**
• **Shioi, Kenzo, c/o Isuzu Motors Limited Fujisawa-shi Kanagawa (JP)**

(74) Representative: **Schaumburg, Thoenes, Thurn, Landskron Patentanwälte Postfach 86 07 48 81634 München (DE)**

(56) References cited:
US-A- 4 848 096          US-A- 5 168 854
US-A- 5 635 633          US-A- 5 649 429
US-A1- 2001 018 831      US-B1- 6 234 148

• PATENT ABSTRACTS OF JAPAN vol. 1996, no. 02, 29 February 1996 (1996-02-29) & JP 7 279742 A (NIPPONDENSO CO LTD), 27 October 1995 (1995-10-27)

**Description**

The present invention relates to a configuration in which a cab air conditioner is also controlled by a fuel injection control unit for an internal combustion engine, which serves to control fuel injection in an internal combustion engine. More specifically, the present invention relates to a fuel injection control unit for an internal combustion engine, which is suitable for failure diagnostics of a pressure sensor of a cab air conditioner. The document US 5635633 diagnoses a pressure sensor a predetermined time after the output changes to take account of possible freezing.

In a fuel injection control unit (ECM: Engine Control Microprocessor) for an internal combustion engine, various factors relating to engine control are detected and the fuel injection quantity and ignition timing advance are controlled based on those factors. The ECM also conducts failure diagnostics of sensors.

Typically, a sensor input circuit for inputting sensor signals into the ECM is provided with a pull-up resistance or pull-down resistance for disconnection detection of a sensor line for transmitting the signals outputted by the sensors. The pull-up resistance is connected to the power source potential of the ECM and the pull-down resistance is connected to the ground potential of the ECM. When the pull-up resistance is provided, if the sensor line is disconnected, the signal inputted into the ECM assumes the power source potential and becomes above the usual usage range, thereby enabling the detection of the disconnection. When the pull-down resistance is provided, if the sensor line is disconnected, the signal inputted into the ECM assumes the ground potential and becomes above the usual usage range, thereby enabling the detection of the disconnection.

However, when a sensor is used of the type to which power is supplied, even if the power supply line to the sensor is disconnected, because the pull-up resistance is connected to the power source potential, power is supplied to the sensor via the sensor line and the signal which is inputted in the ECM is entered in the usual usage range. Therefore, even when the power supply line is disconnected, this disconnection cannot be detected.

On the other hand, the ECM controls not only the internal combustion engine, but also a cab air conditioner. A line from a control switch of the cab air conditioner provided inside the cabin and a line from a pressure sensor provided on the cab air conditioner are connected to the ECM. If the control switch is switched from OFF to ON, the ECM operates the cab air conditioner, and while it operates, the coolant pressure detected by the pressure sensor is monitored and used to control the cab air conditioner.

Since the pressure sensor of the cab air conditioner is also part of the on-board equipment, line disconnection has to be taken into account. If above-described line disconnection, such that the signal inputted in the ECM does not exceed the usual usage range, occurs in the pressure sensor, the coolant pressure cannot be accurately detected and the ECM operates the cab air conditioner by recognizing an incorrect coolant pressure, thereby causing faults such as compressor overloading.

In prior art, for example, in Japanese Patent Application Laid-open No. H7-279742, two-point output values and an interval between the two points were used in the intake air quantity MAF sensor and a failure was assumed when the interval between the two points was larger than the prescribed value.

Japanese Patent Application Laid-open No. 2001-207905 represents related technology.

For example, in Japanese Patent Application Laid-open No. H7-279742, failure diagnostics of the intake air quantity MAF sensor was conducted, but failure diagnostics of the pressure sensor of cab air conditioner was not conducted.

For example, in Japanese Patent Application Laid-open No. H7-279742, a decision concerning failure was made based on the reaching time within which the signal inputted in the ECM reaches a prescribed value. However, when the power supply line or ground line is disconnected this method is not necessarily effective.

Accordingly, it is an object of the present invention to resolve the above-described problems and to provide a fuel injection control unit for an internal combustion engine which is suitable for failure diagnostics of the pressure sensor of a cab air conditioner.

In order to attain the aforesaid object, the present invention provides a fuel injection control unit for an internal combustion engine, which is employed for controlling fuel injection of the internal combustion engine and also for controlling a cab air conditioner, wherein when an input value from a pressure sensor for detecting the coolant pressure of the cab air conditioner does not change to the outside of a range of preset values even if a preset time elapses since a control switch of the cab air conditioner has been switched from OFF to ON, a decision is made that a line of the pressure sensor has been disconnected.

When a decision is made that the line of the pressure sensor has been disconnected, the cab air conditioner may be forcibly stopped.

FIG. 1 is a control block diagram of a cab air conditioner illustrating an embodiment of the present invention.

FIG. 2 is a circuit diagram of an input circuit of a pressure sensor illustrating an embodiment of the present invention.

FIG. 3 is a flowchart of a diagnostics procedure illustrating an embodiment of the present invention.

An embodiment of the present invention will be described below in greater detail with reference to the appended drawings.

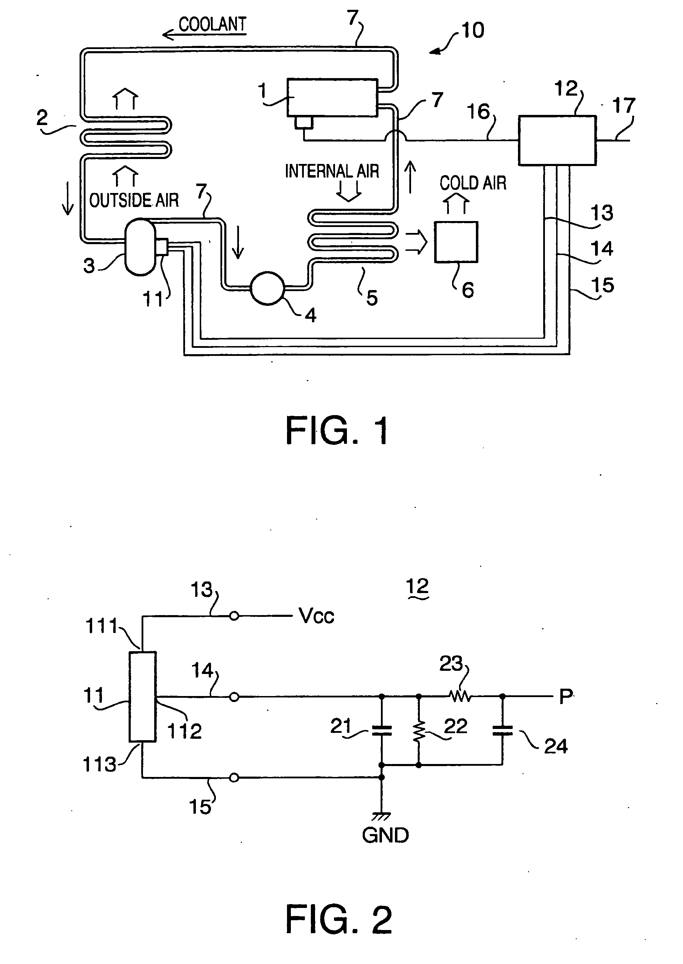

FIG. 1 is a block diagram of the components relating to the control of a cab air conditioner in the fuel injection control unit for an internal combustion engine (ECM).

As shown in the figure, a cab air conditioner 10 comprises a compressor 1 for compressing a coolant and obtaining a high-temperature and high-pressure gas, a condenser 2 for cooling the gas with the outside air and obtaining a high-temperature and high-pressure liquid, a liquid receiver 3 for storing the high-temperature and high-pressure liquid, an expansion valve 4 for causing adiabatic expansion of the liquid taken from the liquid receiver 3 and obtaining a low-temperature and low-pressure liquid, an evaporator 5 for converting this liquid into a low-temperature and low-pressure gas by the heat taken from the air inside the cabin, and a fan 6 for blowing cold air cooled by the evaporator 5 into the cabin. A pipe 7 is provided for causing the circulation of coolant in the following order: compressor 1 - condenser 2 - liquid receiver 3 - expansion valve 4 - evaporator 5 - compressor 1.

A pressure sensor 11 for detecting the coolant pressure is provided in the cab air conditioner 10. In this embodiment, the pressure sensor 11 is mounted on the liquid receiver 3. A total of three lines: power supply line 13, sensor line 14, and ground line 15 are connected between the pressure sensor 11 and ECM 12. An input circuit is introduced in the ECM 12 for reading input values from the pressure sensor 11.

The input circuit, as shown in FIG. 2, comprises a terminal connected to a power supply line 13 for providing power VCC of the ECM 12, a terminal connected to the sensor line 14 for receiving a signal from the pressure sensor 11, and a terminal connected to the ground line 15 for providing ground GND, wherein a primary capacitor 21, a parallel resistance 22, a serial resistance 23, and a secondary capacitor 24 are provided in the terminal of the sensor line 14. This input circuit is described below in greater detail. An output value P of the pressure sensor 11 appears in the serial resistance 23 on the side of the secondary capacitor 24 in the input circuit and is transmitted to the sampling circuit located inside the ECM 12. This value serves as a value (monitor value) inputted by the ECM 12, but because the ECM 12 handles this value as the output value P of the pressure sensor 11 it is called hereinbelow as an output value P of the pressure sensor 11.

As shown in FIG. 1, a line 16 of an air conditioner relay switch is wired from the ECM 12 to the compressor 1. The ECM 12 outputs signals of the air conditioner relay switch and turns the compressor ION/OFF.

A control switch (not shown in the figures) by which an operator controls the cab air conditioner 10 is provided inside the cabin. A line 17 from the control switch is wired to the ECM 12. The ECM 12 inputs the signal of the control switch and reads ON/OFF of the control switch.

The ECM 12 is provided with a failure diagnostics unit (not shown in the figures) which makes a decision that the line of the pressure sensor 11 is disconnected when the input value from the pressure sensor 11 does not change to the outside of the range of preset values (input value P satisfies the condition: $K - \alpha \leq P \leq K + \alpha$) even if a preset time (hereinbelow called "calibration specified time") $\beta$ elapses since the control switch of the cab air conditioner has been switched from OFF to ON, and forcibly stops the cab air conditioner 10. Further, $\alpha$ is called a calibration range value and K is a calibration determination central value. The calibration specified time $\beta$ is a waiting time for confirming that the output (input in the ECM 12) of the pressure sensor 11 has not changed. The failure diagnostics unit decides that an abnormal state has occurred and forcibly stops the cab air conditioner 10 when the input value from the pressure sensor 11 is within a low range after the control switch has been set from OFF to ON and this input value is within a low range and does not change therewithin even after a specific time has elapsed. As a result, an unchecked rapid increase in the actual coolant pressure (air conditioner pressure) and mechanical abnormality such as overloading of various components of the cab air conditioner 10 can be completely prevented.

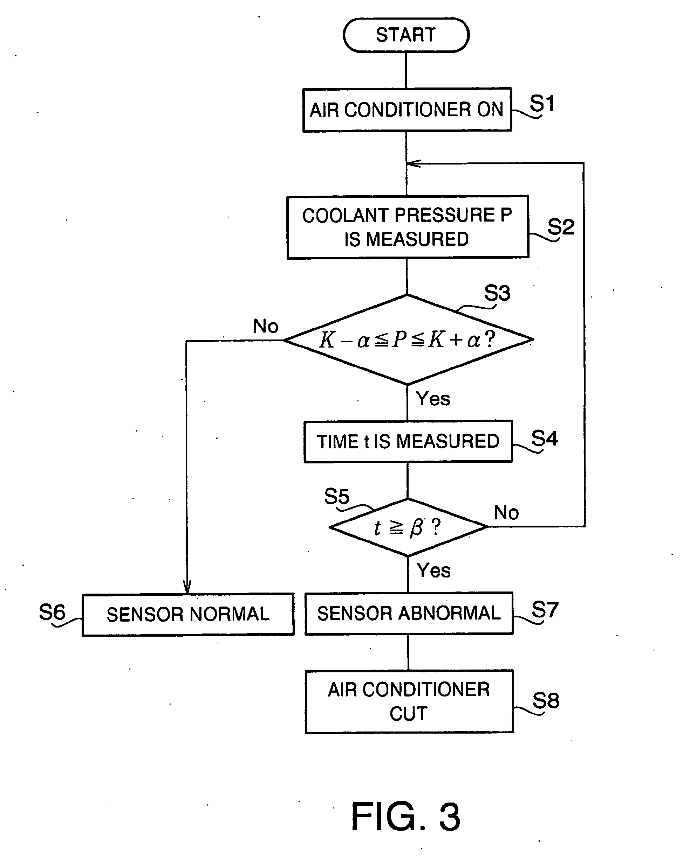

The failure diagnostics unit is implemented by executing a program representing the diagnostics procedure shown in FIG. 3 with a microprocessor (not shown in the figures) located in the ECM 12.

As shown in FIG. 3, the diagnostics procedure in the failure diagnostics unit comprises a step S1 of starting (air conditioner ON) the operation of the cab air conditioner 10 when the control switch is switched from OFF to ON, a step S2 of measuring the output value P of the pressure sensor 11, a step S3 of deciding as to whether the output value P is within a range of $K - \alpha \leq P \leq K + \alpha$, a step S4 of measuring a time t, a step S5 of deciding as to whether the time t exceeds the calibration specified time $\beta$, a step S6 of making a decision that the pressure sensor (air conditioner pressure sensor) 11 operates normally, a step S7 of deciding that the pressure sensor 11 operates abnormally, and a step 8 of forcibly stopping (air conditioner cut) the cab air conditioner 10. The measurement of time t is started when the pressure value P of the pressure sensor 11 enters the aforesaid range from the outside thereof and the measurement is reset when this value moves to the outside of the range.

An issue of whether the failure diagnostics of the line can be conducted directly based on the readings of the output value P in the configuration shown in FIG. 2 will be considered by using specific numerical values. Here, the parallel resistance 22 is a pull-down resistance inserted between the sensor line 14 and the ground inside the ECM 12, and the resistance thereof is Rpd = 51 kΩ. The value of 51 kΩ is a design value. Taking into accounts spread error of ±5% specified for the resistor, the minimum value will be Rpdmin = 48.45 kΩ and the maximum value will be Rpdmax = 53.55 kΩ. The resistance Ri of the serial resistance 23 is 10 kΩ (error ±5%).

For the normal voltage range which is outputted when the pressure sensor 11 operates normally, the maximum value is 95% of Vcc and is 4.75 V if Vcc = 5 V. The minimum value is 2.28% of Vcc and is 0.114 V if Vcc = 5 V. Therefore, it can be decided that abnormality such as line disconnection has occurred if the output value P exceeds 4.75 V or is below 0.114 V. If the output value P is 4.75 V to 0.114 V, it is in a normal voltage range, and a decision relating to abnormality occurrence cannot be made.

The resistance of the pressure sensor 11 itself is examined below. The resistance Ra between a power source terminal 111 and an output terminal 112 is 11.92 kΩ under a condition of open ground terminal 113, the resistance Rb between the output terminal 112 and a ground terminal 113 is 44.11 kΩ under a condition of open power source terminal 111, and the resistance Rc between the power source terminal 111 and the ground terminal 113 is 56.02 kΩ under a condition of open output terminal 112.

1) When the ground line 15 is disconnected

When the ground line 15 is disconnected, the Vcc = 5 V is divided by the resistance between the power source terminal 111 and output terminal 112 and the pull-down resistance 22. Therefore, the output value P becomes

$$\{Rpd/(Ra + Rpd)\}Vcc.$$

The minimum output value P generated when the pull-down resistance 22 is minimum becomes:

$$\{Rpdmin/(Ra + Rpdmin)\}Vcc = \{48.45/(11.92 + 48.45)\}5 = 4.01 \text{ V}.$$

Because this value is within the normal voltage range of 4.75 V to 0.114 V, it is impossible to decide whether it is abnormal or not.

2) When the power supply line 13 is disconnected

When the power supply line 13 is disconnected, the leak current I = 0.2 μA from inside the ECM 12 flows via the parallel resistance 23 to the pull-down resistance 22 and pressure sensor 11. Therefore, the output value P becomes

$$\{Rb \cdot Rpd/(Rb + Rpd) + Ri\}I.$$

The maximum output value P occurring when the pull-down resistance 22 is maximum and the serial resistance 23 is maximum becomes 0.007 V.

Because this value is outside the normal voltage range 4.75 V to 0.114 V, it can be decided to be abnormal.

3) When the sensor line 14 is disconnected

When the sensor line 14 is disconnected, the leak current I = 0.2 μA from the ECM 12 flows via the parallel resistance 23 to the pull-down resistance 22. Therefore, the output value P becomes

$$\{Rpd + Ri\}I.$$

The maximum output value P occurring when the pull-down resistance 22 is maximum and the serial resistance 23 is maximum becomes 0.002 V.

Because this value is outside the normal voltage range 4.75 V to 0.114 V, it can be decided to be abnormal.

Summarizing the aforesaid results, the disconnection of ground line 15 cannot be directly diagnosed from the readings of the output value P.

Here, in accordance with the present invention, an algorithm shown in FIG. 3 is used to diagnose the disconnection of ground line 15 when the output value P is within the normal voltage range 4.75 V to 0.114 V.

In step S1, the operation of the cab air conditioner 10 is started (air conditioner ON). Then, in step S2, the output value P of the pressure sensor 11 is read. In step S2, a decision is made as to whether the condition $K \cdot \alpha \le P \le K + \alpha$ is satisfied. If the decision is NO, the output value P of the pressure sensor 11 is outside the range $K \cdot \alpha \le P \le K + \alpha$. Therefore, the processing flow advances to step S6 and a decision is made that the pressure sensor 11 is normal. The calibration determination central value K and calibration range value $\alpha$ are determined based on the minimum to maximum output values P taking into account the design value and spread error of each component of the input circuit.

If the decision of step S3 is YES, a time t within which the output value P maintains a value within the aforesaid range is measured in step S4. In step S5, a decision is made as to whether the time t is not less than the calibration specified time $\beta$. If the decision is NO, the time elapsed is yet insufficient, the decision is put on hold, and the processing flow returns to step S2.

If the decision of step S5 is YES, the operation of the pressure sensor 11 is decided in step S7 to be abnormal and the cab air conditioner 10 is forcibly stopped (air conditioner CUT) in step S8.

Summarizing the above-described results, with the conventional approach of making a decision as to whether the usual usage range is exceeded, in the configurations having a pull-down resistance 22 in an input circuit, only the disconnection of the power supply line 13 and sensor line 14 could be detected. By contrast, with the present invention, the disconnection of the ground line 15 can be also detected. As a result, the retention of the state in which the coolant pressure cannot be accurately adjusted because the ECM 12 does not recognize the disconnection can be avoided. It goes without saying that the present invention can be also applied to a configuration in which the input circuit has a pull-up resistance.

**Claims**

1. A fuel injection control unit for an internal combustion engine, which is employed for controlling fuel injection of the internal combustion engine and also for controlling a cab air conditioner, **characterized in that** when an input value from a pressure sensor for detecting the coolant pressure of the cab air conditioner does not change to the outside of a range of preset values even if a preset time elapses since a control switch of the cab air conditioner has been switched from OFF to ON, a decision is made that a line of the pressure sensor has been disconnected.

2. The fuel injection control unit for an internal combustion engine according to claim 1, **characterized in that** the cab air conditioner is forcibly stopped when a decision was made that a line of the pressure sensor has been disconnected.

3. The fuel injection control unit for an internal combustion engine according to claim 1 or 2, **characterized in that** the line of the pressure sensor is composed of a power supply line for supplying power to the pressure sensor, a sensor line for picking up signals from the pressure sensor, and a ground line for providing ground to the pressure sensor.

4. The fuel injection control unit for an internal combustion engine according to claim 1 or 2, **characterized in that** a pull-down resistance is inserted between the sensor line for picking up signals from the pressure sensor and the ground line for providing ground to the pressure sensor.

5. The fuel injection control unit for an internal combustion engine according to claim 1, **characterized in that** a pull-up resistance is inserted between the power supply line for supplying power to the pressure sensor and the sensor line for picking up signals from the pressure sensor.

6. The fuel injection control unit for an internal combustion engine according to any one of claims 1 to 5, **characterized in that** the cab air conditioner comprises a compressor for compressing a coolant and obtaining a high-temperature and high-pressure gas, a condenser for cooling the gas with the outside air and obtaining a high-temperature and high-pressure liquid, a liquid receiver for storing the high-temperature and high-pressure liquid, an expansion valve for causing adiabatic expansion of the liquid taken from the liquid receiver and obtaining a low-temperature and low-pressure liquid, an evaporator for converting this liquid into a low-temperature and low-pressure gas by the heat taken from the air inside the cabin, and **characterized in that** a fan for blowing cold air cooled by the evaporator into the cabin, and the pressure sensor is mounted on the liquid receiver.

7. The fuel injection control unit for an internal combustion engine according to any one of claims 1 to 6, **characterized in that** the cab air conditioner comprises a compressor for compressing a coolant and obtaining a high-temperature and high-pressure gas, a condenser for cooling the gas with the outside air and obtaining a high-temperature and high-pressure liquid, a liquid receiver for storing the high-temperature and high-pressure liquid, an expansion valve for causing adiabatic expansion of the liquid taken from the liquid receiver and obtaining a low-temperature and low-pressure liquid, an evaporator for converting this liquid into a low-temperature and low-pressure gas by the heat taken from the air inside the cabin, and a fan for blowing cold air cooled by the evaporator into the cabin, and **characterized in that** a relay switch of the compressor is turned on and the cab air conditioner is operated when the control switch is switched from OFF to ON.

8. The fuel injection control unit for an internal combustion engine according to any one of claims 1 to 7, **characterized in that** the disconnection of the line of the pressure sensor is diagnosed when the output value of the pressure sensor is within a normal voltage range which is between a maximum value and a minimum value outputted when the pressure sensor operates normally, and during the disconnection diagnostics, when an input value from a pressure sensor for detecting the coolant pressure of the cab air conditioner does not change to the outside of a range of preset values even if a preset time elapses since a control switch of the cab air conditioner has been switched from OFF to ON, a decision is made that a line of the pressure sensor has been disconnected.

9. The fuel injection control unit for an internal combustion engine according to any one of claims 1 to 8, **characterized in that** when the output value of the pressure sensor is below or above a normal voltage range which is between a maximum value and a minimum value outputted when the pressure sensor operates normally, a decision is immediately made that the line of the pressure sensor has been disconnected, and when the output value of the pressure sensor is within the normal voltage range, the disconnection of the line of the pressure sensor is diagnosed in the following manner,

said disconnection diagnostics involves setting in advance a range by a calibration determination central value K and a calibration range values $\alpha$ which are below and above thereof, setting in advance a calibration specified time $\beta$ as a waiting time for confirming that the input from the pressure sensor has not changed, starting the operation of the cab air conditioner when the control switch is switched form OFF to ON, then measuring the output value P of the pressure sensor, determining as to whether this output value P is within a range of $K - \alpha \leq P \leq K + \alpha$, starting measurement of a time t when the output value P enters said range from the outside thereof, and resetting measurement of the time t when the output value P moves to the outside of said range, determining as to whether this time t exceeds the calibration specified time $\beta$, making a decision that the pressure sensor is in an abnormal state when $t \geq \beta$, and making a decision that the pressure sensor is in a normal state when the output value P has moved to the outside of said range.

**Patentansprüche**

1. Kraftstoffeinspritzsteuereinheit für einen Verbrennungsmotor, die zur Steuerung der Kraftstoffeinspritzung des Verbrennungsmotors und zudem zur Steuerung einer Fahrgastraumklimaanlage eingesetzt wird, **dadurch gekennzeichnet, dass** festgestellt wird, dass eine Leitung des Drucksensors unterbrochen wurde, wenn ein Eingangswert von einem zur Erfassung des Kühlmitteldrucks der Fahrgastraumklimaanlage dienenden Drucksensor selbst nach Ablauf einer festgelegten Zeitspanne ab dem Umschalten eines Steuerschalters der Fahrgastraumklimaanlage von AUS auf EIN nicht auf einen Wert außerhalb eines Bereichs von festgelegten Werten wechselt.

2. Kraftstoffeinspritzsteuereinheit für einen Verbrennungsmotor nach Anspruch 1, **dadurch gekennzeichnet, dass** die Fahrgastraumklimaanlage zwangsweise abgeschaltet wird, wenn festgestellt wurde, dass eine Unterbrechung der Leitung des Drucksensors eingetreten ist.

3. Kraftstoffeinspritzsteuereinheit für einen Verbrennungsmotor nach Anspruch 1 oder 2, **dadurch gekennzeichnet, dass** die Leitung des Drucksensors aus einer Stromzuführleitung zur Zuführung von Strom zu dem Drucksensor, einer Sensorleitung zur Aufnahme von Signalen vom Drucksensor und einem Erdleiter zur Erdung des Drucksensors besteht.

4. Kraftstoffeinspritzsteuereinheit für einen Verbrennungsmotor nach Anspruch 1 oder 2, **dadurch gekennzeichnet, dass** ein Pulldown-Widerstand zwischen der zur Aufnahme von Signalen vom Drucksensor dienenden Sensorleitung und der zur Erdung des Drucksensors dienenden Erdleitung vorgesehen wird.

5. Kraftstoffeinspritzsteuereinheit für einen Verbrennungsmotor nach Anspruch 1, **dadurch gekennzeichnet, dass** ein Pullup-Widerstand zwischen der zur Zuführung von Strom zum Drucksensor dienenden Stromzuführleitung und der zum Aufnehmen von Signalen vom Drucksensor dienenden Sensorleitung vorgesehen wird.

6. Kraftstoffeinspritzsteuereinheit für einen Verbrennungsmotor nach einem der Ansprüche 1 bis 5, **dadurch gekennzeichnet, dass** die Fahrgastraumklimaanlage einen Verdichter zum Verdichten eines Kühlmittels und zur Erzeugung eines Hochtemperatur- und Hochdruckgases, einen Kondensator zum Kühlen des Gases mit Umgebungsluft und zur Erzeugung einer Hochtemperatur- und Hochdruckflüssigkeit, einen Flüssigkeitsaufnehmer zur Speicherung der Hochtemperatur- und Hochdruckflüssigkeit, ein Expansionsventil zur Hervorrufung einer adiabatischen Ausdehnung der vom Flüssigkeitsaufnehmer kommenden Flüssigkeit und zur Erzeugung einer Niedrigtemperatur- und Niedrigdruckflüssigkeit und einen Verdunster zur Umwandelung dieser Flüssigkeit in ein Niedrigtemperatur- und Niedrigdruckgas durch die von der Luft innerhalb des Fahrgastraums entnommene Wärme umfasst, wobei die Einheit **dadurch gekennzeichnet ist, dass** ein Ventilator zum Einblasen von kalter, durch den Verdunster gekühlter Luft in den Fahrgastraum vorgesehen ist und dass der Drucksensor an dem Flüssigkeitsaufnehmer gehaltert ist.

7. Kraftstoffeinspritzsteuereinheit für einen Verbrennungsmotor nach einem der Ansprüche 1 bis 6, **dadurch gekennzeichnet, dass** die Fahrgastraumklimaanlage einen Verdichter zum Verdichten eines Kühlmittels und zum Erzeugen eines Hochtemperatur- und Hochdruckgases, einen Kondensator zum Kühlen des Gases mit der Umgebungsluft und zum Erzeugen einer Hochtemperatur- und Hochdruckflüssigkeit, einen Flüssigkeitsaufnehmer zum Speichern der Hochtemperatur- und Hochdruckflüssigkeit, ein Expansionsventil zum Herbeiführen einer adiabatischen Ausdehnung der vom Flüssigkeitsaufnehmer kommenden Flüssigkeit und zum Erzeugen einer Niedrigtemperatur- und Niedrigdruckflüssigkeit, einen Verdunster zum Umwandeln dieser Flüssigkeit in ein Niedrigtemperatur- und Niedrigdruckgas durch die von der Umgebungsluft innerhalb des Fahrgastraums entnommene Wärme und einen Ventilator zum Einblasen kalter, durch den Verdunster gekühlter Luft in den Fahrgastraum umfasst, wobei die Einheit **dadurch gekennzeichnet ist, dass** ein Relaisschalter des Verdichters eingeschaltet und die Fahrgastraumklimaanlage in Betrieb gesetzt wird, wenn der Steuerschalter von AUS auf EIN gestellt wird.

8. Kraftstoffeinspritzsteuereinheit für einen Verbrennungsmotor nach einem der Ansprüche 1 bis 7, **dadurch gekennzeichnet, dass** eine Unterbrechung der Leitung des Drucksensors festgestellt wird, wenn der Ausgangswert des Druckssensors innerhalb eines normalen Spannungsbereichs liegt, der zwischen einem Maximalwert und einem Minimalwert angesiedelt ist, welche ausgegeben werden, wenn der Drucksensor normal arbeitet, und dass dann, wenn während der Feststellung der Unterbrechung ein Eingangswert von einem zur Erfassung des Kühlmitteldrucks der Fahrgastraumklimaanlage dienenden Drucksensor selbst dann nicht auf einen Wert außerhalb eines Bereichs von festgelegten Werten wechselt, wenn eine festgelegte Zeitspanne ab dem Umschalten eines Steuerschalters der Fahrgastraumklimaanlage von AUS auf EIN abgelaufen ist, entschieden wird, dass eine Leitung des Drucksensors unterbrochen wurde.

9. Kraftstoffeinspritzsteuereinheit für einen Verbrennungsmotor gemäß einem der Ansprüche 1 bis 8, **dadurch gekennzeichnet, dass** dann, wenn der Ausgangswert des Drucksensors unterhalb oder oberhalb eines normalen Spannungsbereichs liegt, der zwischen einem Maximal- und einem Minimalwert angesiedelt ist, welche ausgegeben werden, wenn der Drucksensor normal arbeitet, sofort entschieden wird, dass die Leitung des Drucksensors unterbrochen wurde, und dass dann, wenn der Ausgangswert des Drucksensors sich innerhalb des normalen Spannungsbereichs befindet, die Unterbrechung der Leitung des Drucksensors in der folgenden Weise festgestellt wird: die Feststellung der Unterbrechung umfasst das Festlegen eines Bereichs vorab durch einen Kalibrierbestimmungs-Mittelwert K und Kalibrierbereichswerte $\alpha$, die unterhalb und oberhalb dieses Mittelwerts liegen, das Einstellen einer Kalibrierspezifizierungszeit $\beta$ vorab als Wartezeit zur Bestätigung, dass die Eingabe vom Drucksensor sich nicht verändert hat, das Starten des Betriebs der Fahrgastraumklimaanlage, wenn der Steuerschalter von AUS auf EIN umgeschaltet wird, das darauffolgende Messen des Ausgangswerts P des Drucksensors, das Bestimmen, ob dieser Ausgangswert P sich innerhalb eines Bereichs $K - \alpha \leq P \leq K + \alpha$ befindet, das Starten der Messung einer Zeit t, wenn der Ausgangswert P von außerhalb des Bereichs in diesen Bereich wechselt, und das Rückstellen der Messung der Zeit t, wenn der Ausgangswert P sich aus diesem Bereich herausbewegt, das Bestimmen, ob diese Zeit t die Kalibierierspezifizierungszeit $\beta$ übersteigt, das Entscheiden, dass der Drucksensor sich in einem unnormalen Zustand befindet, wenn $t \geq \beta$, und das Entscheiden, dass der Drucksensor sich in einem Normalzustand befindet, wenn der Ausgangswert P sich aus dem genannten Bereich herausbewegt hat.

## Revendications

1. Unité de réglage de l'injection de carburant pour un moteur à combustion interne, qui est employée pour régler une injection de carburant du moteur à combustion interne et aussi pour régler un climatiseur de cabine, **caractérisée en ce qu'**il est décidé qu'une ligne d'un capteur de pression, destiné à détecter la pression d'un agent réfrigérant du climatiseur de cabine, a été déconnectée lorsqu'une valeur d'entrée provenant du capteur de pression ne sort pas d'une plage de valeurs prédéfinies, même si un temps prédéfini s'écoule depuis qu'un commutateur de commande du climatiseur de cabine a été commuté d'ARRET à MARCHE.

2. Unité de réglage de l'injection de carburant pour un moteur à combustion interne selon la revendication 1, **caractérisée en ce que** le climatiseur de cabine est arrêté de façon forcée lorsqu'il a été décidé qu'une ligne du capteur de pression a été déconnectée.

3. Unité de réglage de l'injection de carburant pour un moteur à combustion interne selon la revendication 1 ou 2, **caractérisée en ce que** la ligne du capteur de pression est composée d'une ligne d'alimentation en énergie pour l'alimentation en énergie du capteur de pression, d'une ligne de capteur pour la détection de signaux du capteur de pression, et d'une ligne de masse pour la connexion du capteur de pression à la masse.

4. Unité de réglage de l'injection de carburant pour un moteur à combustion interne selon la revendication 1 ou 2, **caractérisée en ce qu'**une résistance d'excursion basse est insérée entre la ligne de capteur pour la détection des signaux du capteur de pression et la ligne de masse pour la connexion du capteur de pression à la masse.

5. Unité de réglage de l'injection de carburant pour un moteur à combustion interne selon la revendication 1, **caractérisée en ce qu'**une résistance d'excursion haute est insérée entre la ligne d'alimentation en énergie pour l'alimentation en énergie du capteur de pression et la ligne de capteur pour la détection des signaux du capteur de pression.

6. Unité de réglage de l'injection de carburant pour un moteur à combustion interne selon l'une quelconque des revendications 1 à 5, **caractérisée en ce que** le climatiseur de cabine comprend un compresseur pour comprimer un agent réfrigérant et obtenir un gaz à haute température et à haute pression, un condenseur pour refroidir le gaz au moyen de l'air extérieur et obtenir un liquide à haute température et à haute pression, un récepteur de liquide pour stocker le liquide à haute température et à haute pression, un détendeur pour provoquer une détente adiabatique du liquide provenant du récepteur de liquide et obtenir un liquide à basse température et basse pression, un évaporateur pour convertir ce liquide en un gaz à basse température et à basse pression par la chaleur prélevée de l'air à l'intérieur de la cabine, ladite unité étant **caractérisée en ce qu'**un ventilateur est installé pour souffler dans la cabine de l'air froid refroidi par l'évaporateur, et le capteur de pression est monté sur le récepteur de liquide.

7. Unité de réglage de l'injection de carburant pour un moteur à combustion interne selon l'une quelconque des revendications 1 à 6, **caractérisée en ce que** le climatiseur de cabine comprend un compresseur pour comprimer un agent réfrigérant et obtenir un gaz à haute température et à haute pression, un condenseur pour refroidir le gaz au moyen de l'air extérieur et obtenir un liquide à haute température et à haute pression, un récepteur de liquide pour stocker le liquide à haute température et à haute pression, un détendeur pour provoquer une détente adiabatique du liquide provenant du récepteur de liquide et obtenir un liquide à basse température et basse pression, un évaporateur pour convertir ce liquide en un gaz à basse température et à basse pression par la chaleur prélevée de l'air à l'intérieur de la cabine, et un ventilateur pour souffler dans la cabine de l'air froid refroidi par l'évaporateur, ladite unité étant **caractérisée en ce qu'**un commutateur à relais du compresseur est mis en marche, et le climatiseur de cabine est mis en fonction lorsque le commutateur de réglage est commuté d'ARRET à MARCHE.

8. Unité de réglage de l'injection de carburant pour un moteur à combustion interne selon l'une quelconque des revendications 1 à 7, **caractérisée en ce que** la déconnexion de la ligne du capteur de pression, destiné à détecter la pression d'agent réfrigérant du climatiseur de cabine, est diagnostiquée lorsque la valeur de sortie du capteur de pression est à l'intérieur d'une plage normale de tensions qui est comprise entre une valeur maximale et une valeur minimale sorties lorsque le capteur de pression fonctionne normalement, et **en ce qu'**il est décidé, pendant un diagnostic de déconnexion, qu'une ligne du capteur de pression a été déconnectée lorsqu'une valeur d'entrée provenant du capteur de pression ne sort pas d'une plage de valeurs prédéfinies, même si un temps prédéfini s'écoule depuis qu'un commutateur de commande du climatiseur de cabine a été commuté d'ARRET à MARCHE.

9. Unité de réglage de l'injection de carburant pour un moteur à combustion interne selon l'une quelconque des revendications 1 à 8, **caractérisée en ce qu'**il est immédiatement décidé que la ligne du capteur de pression a été déconnectée lorsque la valeur de sortie du capteur de pression est inférieure ou supérieure à une plage normale de tensions qui est comprise entre une valeur maximale et une valeur minimale sorties lorsque le capteur de pression fonctionne normalement, et **en ce que** la déconnexion de la ligne du capteur de pression est diagnostiquée de la manière suivante lorsque la valeur de sortie du capteur de pression est à l'intérieur de la plage normale de tensions :

ledit diagnostic de déconnexion implique les étapes suivantes : définir à l'avance une plage par une valeur centrale K de détermination de calibrage, et par des valeurs $\alpha$ de plage de calibrage qui sont inférieure et supérieure à celle-ci, définir à l'avance un temps spécifié $\beta$ de calibrage comme temps d'attente pour confirmer que l'entrée provenant du capteur de pression n'a pas varié, lancer le fonctionnement du climatiseur de cabine lorsque le commutateur de commande est commuté d'ARRET à MARCHE, puis mesurer la valeur de sortie P du capteur de pression, déterminer si cette valeur de sortie P est à l'intérieur d'une plage définie par $K - \alpha \leq P \leq K + \alpha$, lancer une mesure d'un temps t lorsque la valeur de sortie P entre dans ladite plage depuis l'extérieur de celle-ci, et réinitialiser une mesure du temps t lorsque la valeur de sortie P sort de cette plage, déterminer si ce temps t dépasse le temps spécifié $\beta$ de calibrage, décider que le capteur de pression est dans un état anormal lorsque $t \geq \beta$, et décider que le capteur de pression est dans un état normal lorsque la valeur de sortie P est sortie de ladite plage.

FIG. 1

FIG. 2

START

AIR CONDITIONER ON — S1

COOLANT PRESSURE P
IS MEASURED — S2

S3

$K - \alpha \leqq P \leqq K + \alpha$ ?

No

Yes

TIME t IS MEASURED — S4

S5

$t \geqq \beta$ ?

No

Yes

S6 — SENSOR NORMAL

SENSOR ABNORMAL — S7

AIR CONDITIONER
CUT — S8

# FIG. 3

**EP 1 486 364 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5635633 A
- JP H7279742 A
- JP 2001207905 A